# EUROPEAN PATENT SPECIFICATION

(11) **EP 2 493 040 B1**
(45) Date of publication and mention of the grant of the patent: **05.04.2017**
(21) Application number: 12001267.9
(22) Date of filing: 27.02.2012
(51) Int. Cl.: H02G 3/06

(54) **Cable gland**
Kabelflansch
Goupille de câble

(30) Priority: 28.02.2011 IT MI20110290
(43) Date of publication of application: 29.08.2012
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- WO-A1-2009/097842
- DE-A1-102006 012 435
- DE-A1-102009 023 646
- GB-A- 2 091 498
- US-A- 4 787 657
- US-A- 5 823 811

## Description

The present invention relates to a cable gland device.

As is known, a cable gland is used to connect an electrical cable to a device so as to ensure a seal between the cable and the entry hole according to the required degree of protection.

There are various types of cable glands made of different materials according to the type of use.

A conventional cable gland seals the cable by means of a gasket which has a conical outer surface which interferes with the flared internal surface of the gland body.

The gland body has two symmetrical flared seats which correspond to a matching number of external threads that engage a locking ring at one end and the object to which the gland is applied, at the other end.

By screwing the ring onto the body, the conical part of the gasket is pressed and progressively closes the hole of the gasket itself in which the cable to be fastened is arranged.

This closure system ensures only an IP66 protection grade.

Another conventional cable gland, which has a higher protection grade, up to IP68, and can be used for cables with a wider range of diameters, includes a cable seal system that is very different from the preceding one.

The gland body is not symmetrical and has, at one end, a nominal thread of the object and, at the other end, a different thread which is optimized in order to maintain the fastening torque of the ring on the body.

At the cable entry side, the gland body has an annular member with various sectors which are sized appropriately, while a gasket is arranged inside the annular member.

The locking ring has an inclined plane which, when the ring is tightened, closes onto the sectors of the annular member that is present on the body, clamping the gasket, which closes onto the cable, providing the seal.

In some cases, the annular member divided into sectors grips the cable, also acting as a cable retainer.

Conventional cable glands generally have an accessory gaskets that provides a seal between the body and the object to which the gland is applied.

The conventional cable glands described above have the drawback that they are constituted by a relatively large number of components: the main body, the locking ring, the cable retention gasket, the nut and optionally the sealing gasket on the body.

Considering the simplicity and low cost of this type of product, the production and assembly of those various components is onerous and affects significantly the final cost.

WO2009/097842, DE102009023646 and US4787657 disclose cable glands of the above describe type.

GB2091498 discloses a device for holding cables constituted by a nipple associated with a spiral extension that prevents the cable from being bent or kinked.

DE102006012435 discloses a cable gland provided with a gasket having two annular sections with different thickness.

US5823811 discloses a sealed electrical connector assembly including a housing having a flexible section which comprises a unitary sealing member formed as an integral by means of a dual-injection molding process.

The aim of the present invention is to provide a cable gland that is improved with respect to the cited prior art.

Within the scope of this aim, an object of the invention is to provide a cable gland that is constituted by a reduced number of components.

A further object of the invention is to provide a cable gland that is capable of offering a high IP degree of protection.

A further object of the invention is to provide a cable gland with a simplified structure and that can be produced economically.

A further object is to provide a cable gland that is easier to install for the user.

A further object of the present invention is to provide a reliable and safe cable gland.

This aim and these and other objects which will become better apparent hereinafter are achieved by a cable gland device as claimed in the appended claims.

Further characteristics and advantages will become better apparent from the description of preferred but not exclusive embodiments of the invention, illustrated by way of non-limiting example in the accompanying drawings, wherein:

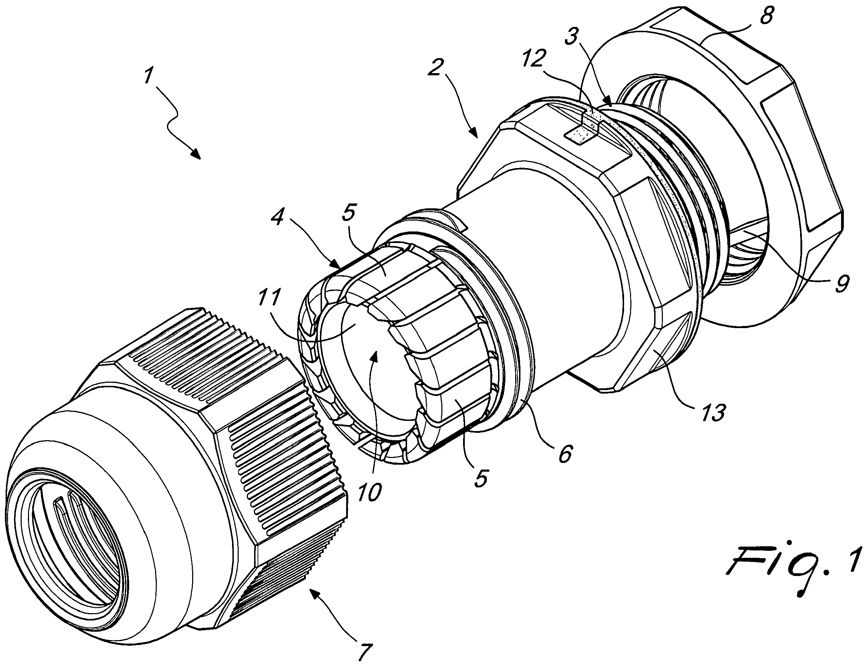

Figure 1 is a perspective view of the cable gland according to the present invention;

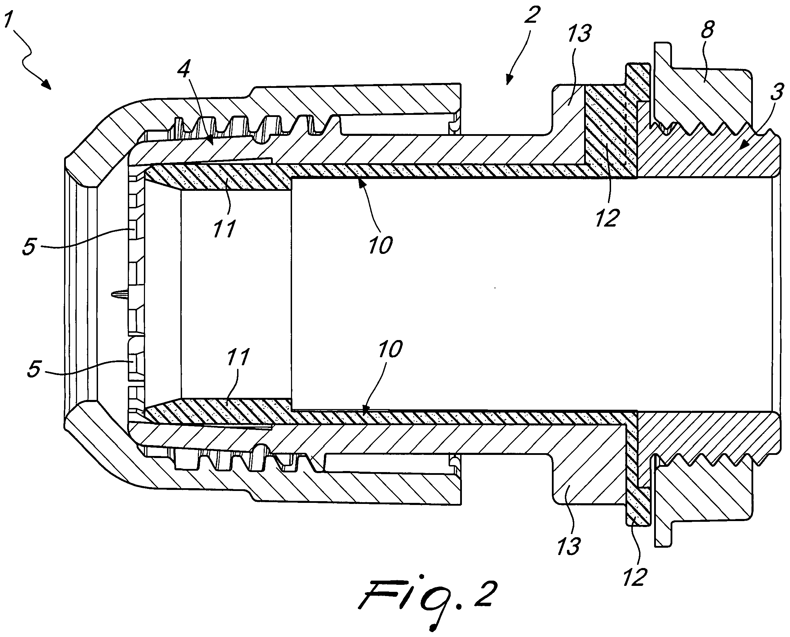

Figure 2 is a longitudinally sectional side view of the cable gland;

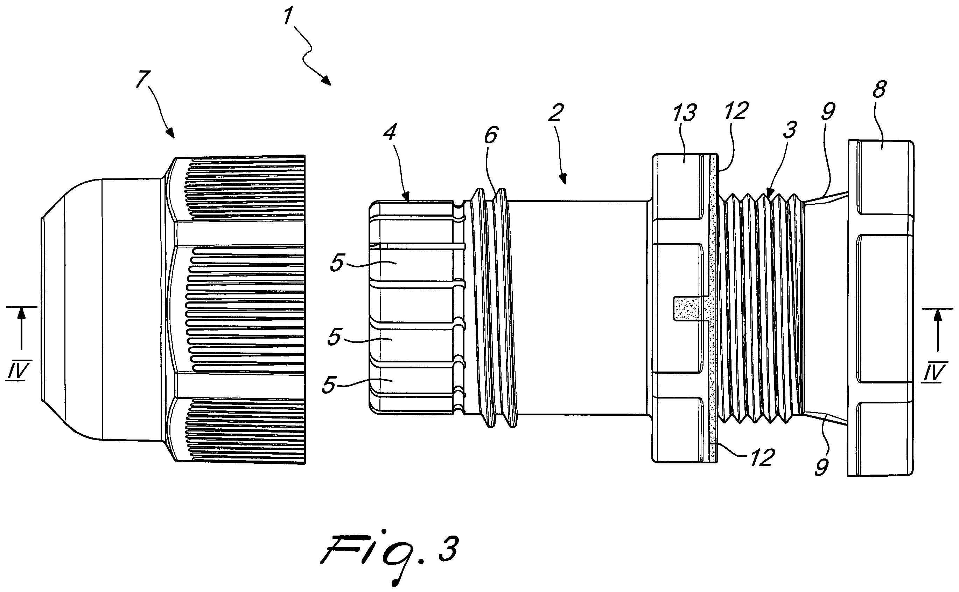

Figure 3 is a partially exploded side view of the device;

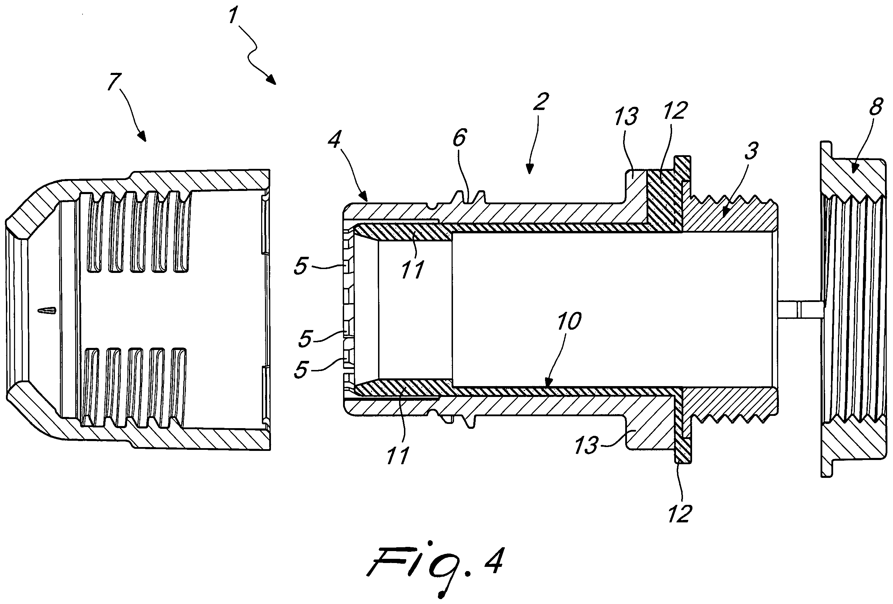

Figure 4 is a sectional side view, taken along the sectional plane IV-IV of Figure 3.

With reference to the cited figures, the cable gland according to the invention, generally designated by the reference numeral 1, has a central body 2, which has a threaded shank 3 and, at the opposite end, a toothed annular member 4.

The toothed annular member 4 is constituted by flexible axial teeth 5.

At the base of the axial teeth 5, the central body 2 has a thread 6 for engaging a locking ring 7.

The ring 7 is associated with the central body 2 in a captive manner: once fitted, the ring 7 can no longer be separated from the central body 2 but can be loosened in order to insert or release a cable.

The threaded shank 3 of the central body 2 is adapted to be screwed to a corresponding threaded seat of the object to which the cable gland is applied.

For example, the object can be a junction box or a case of an electrical device.

The central body 2 can be locked to the object also by means of a nut 8 which is threaded so as to correspond to the threaded shank 3.

According to the present invention, the nut 8 is formed in one piece with the central body 2 and is connected thereto by means of tabs 9.

The cable gland 1 also has a gasket 10, arranged inside the central body 2.

The gasket 10 has a thicker portion 11 and an annular portion 12.

The thicker portion 11 lies substantially at the internal part of the toothed annular member 4, while the annular portion 12 lies between a flange 13 of the central body 2 and the outer surface of the object, not visible in the figures, to which the cable gland is applied.

The thicker portion 11 of the gasket 10 ensures the seal when the ring fastens the cable by means of the annular member 4, while the annular portion 12 ensures the seal between the body 2 of the cable gland and the object to which it is applied. The gasket 10 is manufactured by means of a double molding technique during the operation for forming the central body 2.

Differently from the conventional cable glands, the cable gland according to the invention is constituted by just two components: the ring 7 and the assembly constituted by the central body 2, the double gasket 10 and the nut 8, which are formed monolithically with a co-molding process.

In practice it has been found that the invention achieves the intended aim and objects, providing a cable gland which is constituted by a number of parts that is greatly reduced with respect to a cable gland having a conventional structure.

Differently from a conventional cable gland, which is constituted by at least five separate components such as the body, the ring, the nut, the cable fastening gasket and the gasket for providing a seal between the container and the cable gland, the device according to the present invention is constituted by just two components which can be easily assembled during production.

The central body, nut, cable fastening gasket and gasket for providing a seal between the container and the cable gland are in fact provided monolithically and only the ring 7 is mounted by snap action on the body 2 and is rendered captive.

The captive characteristic of the ring is advantageous especially from the point of view of the user. Until now, the ring, normally provided already screwed onto the body, was in fact normally unscrewed completely and fitted onto the cable before inserting the cable in the body, and the operator ran the risk of inserting the cable in the body and forgetting to first fit the locking ring on the cable.

Another advantageous characteristic of the device according to the present invention is constituted by the fact that the fixing nut is provided monolithically with the central body. At the time of use, the operator removes the nut and screws it onto the body, which is already positioned in the hole of the container, if required by the type of assembly.

This spares the manufacturer the step of assembling the nut on the body.

The nut 8 is associated with the body 2 by means of two tabs which can be easily broken by the operator at the time of installation.

## Claims

1. A cable gland device comprising a central body **(2)** which has a threaded shank **(3) adapted to be screwed to a corresponding threaded seat of an object to which the cable gland is applied,** and, at the opposite end, a toothed annular member **(4);** said toothed annular member **(4)** is constituted by flexible axial teeth **(5);** at the base of said axial teeth **(5)** said central body **(2)** has a thread **(6)** engaging a locking ring **(7);** a gasket **(10)** arranged inside said central body **(2);** said gasket **(10)** having an **axial** portion **(11)** and an annular portion **(12);** said **axial** portion **(11)** extending at the internal part of said toothed annular member **(4)** providing a seal between said body **(2)** and a cable applied to said cable gland; said annular portion **(12)** is arranged at said shank **(3)** providing a seal between said body **(2)** and said object said cable gland device further comprising a nut (8) which is threaded so as to correspond to said threaded shank (3); said cable gland device being **characterized in that** said nut (8) is formed monolithically with said central body (2), during the operation for forming said central body (2), and is connected to said central body (2) by means of breakable tabs (9) which can be easily broken by an operator at the time of installation.

2. The cable gland device according to claim 1, **characterized in that** said ring **(7)** is associated with the central body **(2)** in a captive manner, once the ring **(7)** has been fitted it can no longer be separated from the central body **(2)** but it can be loosened in order to insert or release a cable.

3. The cable gland device according to one or more of the preceding claims, **characterized in that** said annular portion **(12)** of said gasket **(10)** lies at a flange **(13)** of said central body **(2)** which is adjacent to said threaded shank **(3).**

## Patentansprüche

1. Kabelanschlussvorrichtung, die einen zentralen Körper (2) umfasst, der einen Gewindeschaft (3) hat, ausgebildet, um in einen entsprechenden Gewindesitz eines Gegenstands eingeschraubt zu werden, an dem der Kabelanschluss angebracht wird, und am gegenüberliegenden Ende ein Zahn-Ringglied (4); das Zahn-Ringglied (4) besteht aus biegsamen axialen Zähnen; an der Basis der axialen Zähne (5) hat der zentrale Körper (2) ein Gewinde (6), das einen Klemmring (7) hält; eine Dichtung (10), angeordnet innerhalb des zentralen Körpers (2); wobei die Dichtung (10) einen axialen Abschnitt (11) und einen ringförmigen Abschnitt (12) hat; wobei der axiale Abschnitt (11) sich am inneren Teil des Zahn-Ringglieds (4) erstreckt, eine Abdichtung zwischen dem Körper (2) und einem mit dem Kabelanschluss verbundenen Kabel bildend; der ringförmige Abschnitt (12) ist an dem Schaft (3) angeordnet, eine Abdichtung zwischen dem Körper (2) und dem Gegenstand bildend, wobei die Kabelanschlussvorrichtung weiter eine Mutter (8) umfasst, die ein Gewinde hat, um dem Gewindeschaft (3) zu entsprechen; wobei die Kabelanschlussvorrichtung dadurch gekenntzeichnet ist, dass die Mutter (8) monolisthisch mit dem zentralen Körper (2) geformt ist, während des Vorgangs zum Formen des zentralen Körpers (2), und mit dem zentralen Körper (2) durch zerbrechliche Dornen (9) verbunden ist, die von einem Bediener zum Zeitpunkt der Installation leicht zerbrochen werden können.

2. Kabelansehlusstrorrichtung gemäß Anspruch 1, **dadurch gekennzeichnet, dass** der Ring (7) unverlierbar mit dem zentralen Körper (2) verbunden ist; sobald der Ring (7) montiert wurde, kann er nicht mehr vom zentralen Körper (2) getrennt werden; er kann jedoch zum Einführen oder Herausziehen eines Kabels gelockert werden.

3. Kabelanschlussvorrichtung gemäß einem oder mehreren der obigen Ansprüche, **dadurch gekennzeichnet, dass** der ringförmige Abschnitt (12) der Dichtung (10) an einem Flansch (13) des zentralen Körpers (2) liegt, der an den Gewindeschaft (3) angrenzt.

## Revendications

1. Dispositif de goupille de câble comprenant un corps central (2) qui a une tige filetée (3) adaptée pour être vissée sur un siège fileté correspondant d'un objet sur lequel la goupille de câble est appliquée, et sur le côté opposé, un élément annulaire denté (4); ledit élément annulaire denté (4) est constitué de dents axiales flexibles (5); à la base desdites dents axiales (5), ledit corps central (2) présente un filet (6) mettant en prise une bague de verrouillage (7), un joint d'étanchéité (10) agencé à l'intérieur dudit corps central (2); ledit joint d'étanchéité (10) ayant une partie axiale (11) et une partie annulaire (12); ladite partie axiale (11) s'étendant sur la partie intérieure dudit élément annulaire denté (4), fournissant un joint entre ledit corps (2) et un câble appliqué sur ladite goupille de câble; ladite partie annulaire (12) est agencée sur ladite tige (3) fournissant un joint entre ledit corps (2) et ledit objet; ledit dispositif de goupille de câble comprenant en outre un écrou (8) qui est fileté de façon à correspondre à ladite tige filetée (3); ledit dispositif de goupille de câble étant **caractérisé en ce que** ledit écrou (8) est formé de façon monolithique avec ledit corps central (2), pendant l'opération de formation dudit corps central (2), et est relié audit corps central (2) au moyen d'onglets (9) cassables qui peuvent être facilement cassés par un opérateur au moment de l'installation.

2. Dispositif de goupille de câble selon la revendication 1, **caractérisé en ce que** ladite bague (7) est associée au corps central (2) de manière captive, une fois que la bague (7) a été logée, elle ne peut plus être séparée du corps central (2) mais elle peut être desserrée afin d'insérer ou de libérer un câble.

3. Dispositif de goupille de câble selon l'une ou plusieurs des revendications précédentes, **caractérisé en ce que** ladite partie annulaire (12) dudit joint d'étanchéité (10) repose sur une bride (13) dudit corps central (2) qui est adjacente à ladite tige filetée (3).
